(19) Europäisches Patentamt
European Patent Office
Office européen des brevets

(11) **EP 3 110 152 A1**

(12) **EUROPEAN PATENT APPLICATION**

(43) Date of publication:
**28.12.2016 Bulletin 2016/52**

(21) Application number: **15305991.0**

(22) Date of filing: **25.06.2015**

(51) Int Cl.:
*H04N 19/105* [(2014.01)]   *H04N 19/107* [(2014.01)]
*H04N 19/14* [(2014.01)]   *H04N 19/147* [(2014.01)]
*H04N 19/159* [(2014.01)]   *H04N 19/176* [(2014.01)]
*H04N 19/66* [(2014.01)]   *H04N 19/37* [(2014.01)]

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **DE SCHEPPER, Koen**
 **2018 Antwerpen (BE)**
• **RONDÃO ALFACE, Patrice**
 **2018 Antwerpen (BE)**

(74) Representative: **ALU Antw Patent Attorneys Intellectual Property and Standards Copernicuslaan 50**
 **2018 Antwerp (BE)**

(54) **METHOD AND DEVICE FOR ENCODING A VIDEO**

(57) Embodiments relate to a method for encoding a video ($V_I$), executed by a video encoding device (1), comprising, for successive current portion ($F_c$) of the video, encoding the current portion of the video in function of at least one reference portion ($F_{ref}$) of the video by, for respective current blocks ($B_c$) of the current portion:
- determining (S1) a reference block ($B_r$) of the reference portion matching the current block of the current portion, in function of said current block, of said reference portion and of age data ($A_{ref}$) associated with the reference portion, wherein the age data specifies, for respective groups of pixels of the reference portion, the number of times, counted in number of successive current portions, that said pixels have not been intra-coded,
- encoding (S3, S4) the current block by intra-coding or by inter-coding in function of the determined reference block, in function of a selection criteria (52) which depends on said age data ($A_{ref}$).

FIG. 1

FIG. 2

**Description**

FIELD OF THE INVENTION

The present invention relates to the field of video encoding. In particular, the present invention relates to methods and devices for encoding and decoding a video.

BACKGROUND

In order to provide random access to a video stream encoded in for example H.264 or H.265 (or VP8, VP9 and the alike), and to recover from errors due to non-decoded references, a completely intra coded frame is usually required (sometimes referred to IDR in H.264 or IRAP in H.265). This has some consequences:

- you need at least every x frames a new I-frame that has typically a bitrate larger by two to three orders of magnitude with respect to P and B-slices respectively (mono-directional and bi-directional motion compensated frames),
- this cost in bitrate most of the time induce a larger latency in order to transmit such bitrate peak,
- it follows that on average x/2 frames are needed to recover from errors when access is done randomly,
- trick-playing is only possible at every x frames,
- the complete image is always refreshed at the same time/timing, while this might not be necessary,
- if packets are marked with different dropping probabilities based on their importance, important packets (I-frames) are always sent in a short time frame of high load, without having less important packets available (for the same stream).

Today the best known mechanism solving these disadvantages is to do partial intra-coded frames as a sliding window over the image. This technique is referred to as progressive intra refresh (mostly used for H.264 and H.265) and is typically used for real-time streaming (this also corresponds to the more general case of open-GOP, or open Group Of Pictures). Every frame, a next column of macroblocks or blocks is intra refreshed, and there are no references used at that point to the not yet refreshed part. The disadvantage of this system is that this strict swipe is surprisingly well perceptible by a viewer and that it partially refreshes the video frames in a uniform pattern without giving any preference to the more important or salient parts of it (such as a Region Of Interest (ROI)). The visibility of this intra refresh swipe is mainly due to its linear motion in the video that is not natural at all.

SUMMARY

It is thus an object of embodiments of the present invention to propose a method and a device for encoding a video, which do not show the inherent shortcomings of the prior art.

Accordingly, embodiments relate to a method for encoding a video, executed by a video encoding device, comprising, for successive current portion of the video, encoding the current portion of the video in function of at least one reference portion of the video by, for respective current blocks of the current portion:

- determining a reference block of the reference portion matching the current block of the current portion, in function of said current block, of said reference portion and of age data associated with the reference portion, wherein the age data specifies, for respective groups of pixels of the reference portion, the number of times, counted in number of successive current portions, that said pixels have not been intra-coded,
- encoding the current block by intra-coding or by inter-coding in function of the determined reference block, in function of a selection criteria which depends on said age data.

Correspondingly, embodiments relate to a video encoding device configured for executing the above-mentioned method.

In some embodiments, the method comprises determining and storing an age of said current block in function of an age of the reference block, by incrementing the age of the reference block in case of inter-coding and by setting a default value in case of intra-coding.

The selection criteria may comprise enforcing a maximum age for the current block.

The selection criteria may comprise selecting a set of current blocks to be intra-coded, in function of a priority level which depends on said age data and/or in function of a target age distribution for the current portion, and/or in function of a target spatial distribution of intra-coded current blocks for the current portion.

Determining a reference block may comprise minimizing a weighted sum of a block similarity value and a block age value.

In some embodiments, the method comprises segmenting the current portion into a plurality of current blocks in function of said age data.

The current portion may be for example a current frame, an area of a current frame, or a version of a current frame at a given resolution layer.

The method may comprise determining an encoded video according to H.264/AVC or SVC, wherein said current block is a macroblock.

The method may comprise determining an encoded video according to H.265/HEVC or SHVC, wherein said current block is a prediction unit.

The method may comprise sending the encoded video by grouping current block of the same age. The method may comprise assigning a transmission priority to a group of current blocks in function of their age.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a block diagram of a video encoding device,
Figure 2 is a flowchart of steps of a method for encoding a video, executed by the video encoding device of Figure 1,
Figure 3 illustrates successive frames encoded by the video encoding device of Figure 1, and
Figure 4 is a structural view of the video encoding device of Figure 1.

DESCRIPTION OF EMBODIMENTS

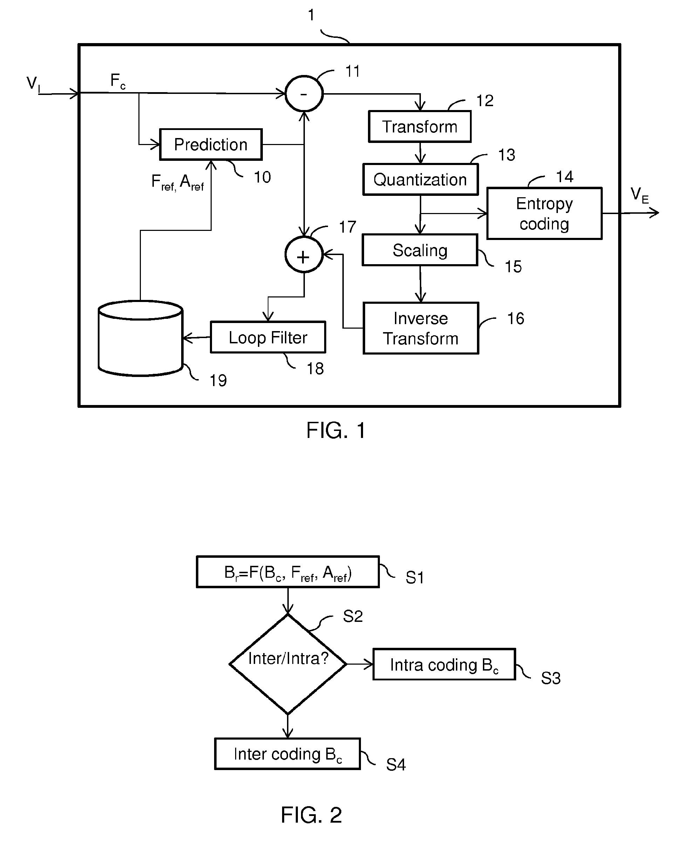

**Figure 1** is a block diagram of a video encoding device 1 according to one embodiment. The video encoding device 1 comprises a prediction module 10, a comparator 11, a transform module 12, a quantization module 13, an entropy coding module 14, a scaling module 15, an inverse transform module 16, a reconstruction module 17, a loop filter 18 and a working memory 19.

The video encoding device 1 has a similar block diagram as known video encoders. Therefore, the comparator 11, the transform module 12, the quantization module 13, the entropy coding module 14, the scaling module 15, the inverse transform module 16, the reconstruction module 17, and the loop filter 18 will not be described in details and the following description focuses on the prediction module 10 and the working memory 19.

The video encoding device 1 encodes an input video $V_I$ into an encoded video $V_E$ by processing successive current frames $F_c$. A current frame $F_c$ is encoded in function of one or more reference frames $F_{ref}$ and of age data $A_{ref}$ associated with the respective reference frames $F_{ref}$. The working memory 19 stores a sliding window of reference frames $F_{ref}$ and associated age data $A_{ref}$.

The age data $A_{ref}$ specify the ages of the pixels of the reference frame $F_{ref}$, defined as the number of time, measured in number of successive frames, that a pixel has not been intra refreshed. This is also equivalent to the number of transmitted reference frames from which the pixel is being predicted using reference pixels that have not been intra refreshed. Note here that in some embodiments, the successive frame are encoded in display order but in other embodiment, the coding order is different from the display order. Thus, a reference frame may be a frame displayed in the past or in the future with respect to the current frame. The age is based on the coding order.

When coding the current frame $F_c$, the prediction module 10 determines age data associated with the current frame $F_c$ and the working memory 19 stores the determined age data, to be used when the current frame $F_c$ is used as a reference frame $F_{ref}$ for a following frame. An intra coded pixel of the current frame $F_c$ depends on no other frame info, and gets age 0. An inter-coded pixel with reference to a group of pixels in a frame that was transmitted n frames ago gets the age of those pixels plus n.

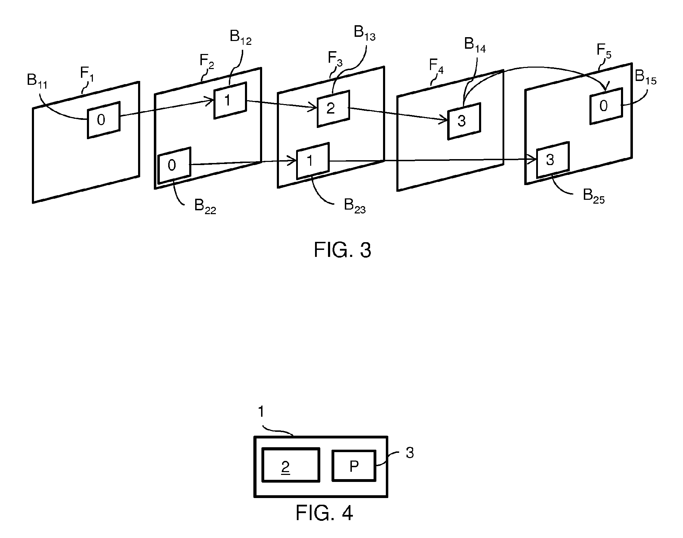

The age data $A_{ref}$ is used by the prediction module 10, as will be described in more details with reference to Figures 2 and 3. The current frame $F_c$ is segmented in a plurality of blocks $B_c$. A block $B_c$ may be for example a macroblock in the context of an H.264/AVC encoder or similar, a prediction unit in the context of a H.265/HEVC encoder or similar, a BLOCK in the context of a VP8/VP9 encoder or similar. The idea is to match blocks $B_c$ of the current frame $F_c$ with blocks $B_r$ of the reference frame $F_{ref}$, by taking into account the similarities between blocks, as in known encoders, but also by preferring the youngest pixels.

The age data $A_{ref}$ can specify the age of pixels by groups of one or more pixels, for example by blocks of pixels.

The encoded video $V_E$ may comply with a known video encoding standard such as H.264/AVC, H.265/HEVC, their respective scalable extension SVC and SHVC or others...

**Figure 2** is a flowchart of a part of a method for encoding a video, executed by the video encoding device 1.

The encoding device 1 determines a reference block $B_r$ of the one or more reference frame $F_{ref}$ associated with the current block $B_c$ of the current frame $F_c$, taking the age data $A_{ref}$ into account (Step S1). More specifically, the encoding device 1 searches for a reference block $B_r$ matching two criteria: First, the reference block $B_r$ should be similar to the current block $B_c$. "Similar" means for example a small difference measured in SAD (sum of absolute differences) or with SATD (sum of absolute transform differences), as in existing block-matching prediction. Second, the reference block $B_r$ should have the youngest pixels. The two criteria may be balanced, for example by using a weighted sum of a block similarity value and a block age value. The reference block $B_r$ may be specified by prediction data, for example by a motion vector.

In an example, determining the reference block $B_r$ associated with the current block $B_c$ uses Equation 2 below. For comparison, Equation 1 shows the classical R-D optimization using a lagrangian weight for balancing the distortion D obtained with a given prediction and the bitrate R induced by this prediction (here represented as the motion vector *mv*).

$$Equation\ 1: \left(mv_x, mv_y\right)$$
$$= \arg\min_{(mv_x, mv_y)} \left( \sum_{(i,j)\in m} D\left(I_t(i,j) - I_{t-1}\left(mv_x + i, mv_y + j\right)\right) \right)$$
$$+ \lambda\, R(mv_x, mv_y))$$

$$Equation\ 2: \left(mv_x, mv_y, a_m\right)$$
$$= \arg\min_{(mv_x, mv_y, a_m)} \left( \sum_{(i,j)\in m} D\left(I_t(i,j) - I_{t-1}\left(mv_x + i, mv_y + j\right)\right) \right)$$
$$+ \lambda\, R\left(mv_x, mv_y\right) + \alpha A((mv_x, mv_y)))$$

In Equation 2, a is a weighting factor and $A(mv_x, mv_y)$ is the age of the current block $B_c$ when using a reference block $B_r$ specified by the motion vector $(mv_x, mv_y)$. A(mvx, mvy) may be determined as the maximum age of the pixels of the current block $B_c$, which, for the respective pixels, is the age of the pixel of the reference block $B_r$ from which it is predicted plus the distance (in terms of successive frame) between the current frame $F_c$ and the reference frame $F_{ref}$. Also, $a_m$ represents the age $A(mv_x, mv_y)$ of the current block $B_c$ for the determined reference block $B_r$, and may be stored in age data associated with the current frame $F_c$, to be used later when the current frame $F_c$ is used as a reference frame.

Then, the encoding device 1 encodes the current block $B_c$ without reference to the reference block $B_r$ (intra coding, step S3) or with reference to the reference block $B_r$ (inter coding, step S4), in function of a selection criteria which depends on the age data $A_{ref}$ (step S2).

For example, the selection criteria may involve a maximum age $a_{max}$ for the current block $B_c$. Accordingly, if $a_m > a_{max}$, the current block is intra coded. In contrast, in an embodiment, all the current blocks $B_c$ for which $a_m <= a_{max}$ are inter coded. In another embodiment, a set of current blocks $B_c$ is selected within the current blocks for which $a_m <= a_{max}$. The selected blocks are intra coded and the non-selected blocks are inter coded.

This selection may target a pixel age distribution per frame. A target can be to have an equal amount of pixels of all ages, an increasing/decreasing amount per age, or any other more complex distribution model. The maximum age can also be made variable to compensate video complexity, and to have a more constant bit-rate encoding with a constant quality (but variable error recovery time). The selection criteria may also target a spatial (dithered) age distribution of pixels to guarantee non-local image impact. If future frames are available, also the "hit-rate" for future references can determine the age limit of the references. If a (group of) pixel(s) can be reused more in the future, it can best have a lower age. A pixel that will not be used in future frames can reuse older references if necessary. Even for interactive/real-time video encoders, a small number of future frames can be available for this last optimization. In order to avoid that blocks are all intra refreshed at the same time, a priority queue algorithm may be used to select which blocks need to be refreshed in priority. This priority, noted $p_m$, can be either only based on the age of the block or also combined with the saliency of the block. Several strategies are possible to avoid that the number of intra refreshes per frame is kept as constant as possible. One obvious approach is to force intra refreshes for $1/a_{max}$ of the blocks of a frame according to the priority queue.

The video encoding device 1 may comprise a deblocking filter like a known H.264/AVC encoder. One option is to disable the deblocking filter, as done in classic progressive intra refresh. Another option is to disable it at slice boundaries, where intra refreshed blocks would be grouped in one slice.

When transmitting the encoded video $V_E$, in an embodiment, the encoding device 1 groups blocks $B_c$ per age and sends them together with a priority level depending on the age. Specifically, the younger the lower drop probability, such that the least quality is lost when the oldest packets are lost. In the example of H.264/AVC, the grouping of macroblocks can use the explicit type of FMO (Flexible Macroblock Ordering). Another approach could be to adapt the prioritization of macroblocks in such a way they can be grouped in a ROI or several ROIs.

**Figure 3** shows successive frames $F_1$, $F_2$, $F_3$, $F_4$ and $F_5$ encoded by the video encoding device 1. Some blocks are shown with their respective ages. In this example, a maximum age is set to $a_{max}=3$. The first frame F1 is intra coded and all pixels have an age 0.

Blocks $B_{11}$, $B_{12}$, $B_{13}$, $B_{14}$ and $B_{15}$ are associated with each other (at step S2). Accordingly, block $B_{12}$ is inter coded in function of block $B_{11}$ and its age is set to 1, block $B_{13}$ is inter coded in function of block $B_{12}$ and its age is set to 2, and block $B_{14}$ is inter coded in function of block $B_{13}$ and its age is set to 3. This is illustrated by straight arrows which represent motion vectors. In contrast, since inter coding block $B_{15}$ in function of block $B_{14}$ would lead to an age 4 above $a_{max}$, block $B_{15}$ is intra coded and gets an age 0. This is shown by a curved arrow.

Blocks $B_{22}$, $B_{23}$ and $B_{25}$ are shown to illustrate that various blocks of one frame can have different ages and that, in case a current frame $F_c$ is encoded in function of more than one reference frame $F_{ref}$, a block $B_{25}$ may be encoded in function of a block $B_{23}$ distant from more than one frame in the past, and that the age is incremented accordingly.

Generally speaking, if the maximum age allowed is equal to $a_{max}$, then a video decoding device would need a maximum of $a_{max}$ frames to start decoding correctly a video stream from any point, without the problem of having intra frames peaks. More, because pixels (blocks) will be refreshed in a more scattered, distributed manner than for the known progressive intra refresh technique, the likelihood to perceive such intra refresh is much lower. Indeed this relative randomization of intra refreshed blocks does no longer represent a linear, predictable, and therefore perceptible, swipe effect. The scientific literature on the modeling of the Human Visual System (HVS) agree on the fact that it includes an "integrator" principle, that is some details appearing only in one frame at some local region during one second are said to be not perceived. This effect is sometimes also referred to as "change blindness" and motivates the imperceptibility of a scattering of the block refreshes.

In one embodiment, a video decoding device receives and decodes the encoded video $V_E$. As the age of blocks or pixels can easily be reconstructed by the video encoding device, the video encoding device 1 can also use the age to carry information to the decoder. For instance a decoder can skip processing of blocks older than a specific age, because it has not enough processing resources. The video encoding device 1 can set on purpose an old age for blocks that are only minimally changed.

In the example described with reference to Figures 1 to 3, the video encoding device 1 encodes a current frame $F_c$ in function of one or more reference frames $F_{ref}$. More generally, the encoding device 1 encodes a current portion of the video in function of one or more reference portions. A portion may be a frame, an area of a frame, a version of a frame at a given resolution layer,...

For example, in some embodiments, the video encoding device 1 use a scalable encoding format such as SVC, the scalable extension of H.264. In this case, the age of macroblocks is computed by taking into account inter-layer dependencies as well. This means that if a frame of an enhancement layer is predicted from the base layer, the age of the macroblocks of such frame should be incremented with respect to the age of the respective frame in the base layer.

As explained previously, a current frame or portion is segmented in blocks. A block can be for example a macroblock in H.264/AVC or a prediction unit in H.265/HEVC.

In an embodiment, the video encoding device 1 uses HEVC, wherein macroblocks are replaced by a quadtree segmentation of the frame content into Coding Units (CU), Prediction Units (PU) and Transform Units (TU). In the quadtree, large CUs typically contain 64x64 pixels compared to the 16x16 pixels of a macroblock in AVC. If the content is textured or salient, an HEVC encoder typically refines the quadtree segmentation by creating smaller CUs following some content uniformity criterion that is not specified by the standard but that is left to the encoder so as to balance compression performance and computational complexity. In this embodiment, the video encoding device 1 use the age of the PUs as described before with reference to blocks. The age of a CU is then set equal to the maximal age of the PUs it contains. Furthermore, the video encoding device 1 may adapt the quadtree segmentation in order to optimize the age-based progressive intra refresh. Indeed, since the best prediction based on a given motion vector might not be well adapted with a CU or PU of the previous frame, the video encoding device 1 may refine the segmentation of the PU so that the age (set as the maximum age of the region used for prediction) is minimized. For example, the video encoding device 1 splits the PUs of the current frame with the objective of minimizing their age. Because TUs can be applied over different PUs (TU and PU must be smaller or of equal size to their respective CU but there a TU can contain several PUs and vice versa). In this context, the video encoding device 1 restricts TUs to only contain PUs of the same age.

In another embodiment, the video encoding device 1 uses SHVC, the scalable extension of HEVC. In this embodiment, the only difference relates to a) the upsampled reference frame whose age is here set equal to the age of its base layer corresponding frame (because this frame is de facto upsampled after its encoding or decoding, so there is no need in incrementing its age) and b) the motion information also contains now the age information of the corresponding reference. In the encoding of the enhancement layer, the choice of the prediction mode is now balanced between intra-layer prediction and inter-layer mechanisms with their respective age information.

**Figure 4** is a structural view of the video encoding device 1, which comprises a processor 2 and a memory 3. The memory 3 stores a computer program P which, when executed by the processor 2, causes the video encoding device 1 to execute one of the method described above.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for encoding a video ($V_l$), executed by a video encoding device (1), comprising, for successive current portion ($F_c$) of the video, encoding the current portion of the video in function of at least one reference portion ($F_{ref}$) of the video by, for respective current blocks ($B_c$) of the current portion:

   - determining (S1) a reference block ($B_r$) of the reference portion matching the current block of the current portion, in function of said current block, of said reference portion and of age data ($A_{ref}$) associated with the reference portion, wherein the age data specifies, for respective groups of pixels of the reference portion, the number of times, counted in number of successive current portions, that said pixels have not been intra-coded,
   - encoding (S3, S4) the current block by intra-coding or by inter-coding in function of the determined reference block, in function of a selection criteria (S2) which depends on said age data ($A_{ref}$).

2. Method according to claim 1, comprising determining and storing an age of said current block in function of an age of the reference block, by incrementing the age of the reference block in case of inter-coding and by setting a default value in case of intra-coding.

3. Method according to claim 2, wherein said selection criteria comprises enforcing a maximum age for the current block.

4. Method according to claim 3, comprising determining said maximum age in function of a value representative of a complexity of the video.

5. Method according to one of claims 2 to 4, wherein said selection criteria comprises selecting a set of current blocks to be intra-coded, in function of a priority level which depends on said age data.

6. Method according to one of claims 2 to 5, wherein said selection criteria comprise selecting a set of current blocks to be intra-coded, in function of a target age distribution for the current portion.

7. Method according to one of claims 2 to 5, wherein said selection criteria comprise selecting a set of current blocks to be intra-coded, in function of a target spatial distribution of intra-coded current blocks for the current portion.

8. Method according to one of claims 1 to 7, wherein determining a reference block comprises minimizing a weighted sum of a block similarity value and a block age value.

9. Method according to one of claims 1 to 8, comprising segmenting said current portion into a plurality of current blocks in function of said age data.

10. Method according to one of claims 1 to 9, wherein said current portion is a current frame, an area of a current frame, or a version of a current frame at a given resolution layer.

11. Method according to one of claims 1 to 10, comprising:

- determining an encoded video according to H.264/AVC or SVC, wherein said current block is a macroblock, or
- determining an encoded video according to H.265/HEVC or SHVC, wherein said current block is a prediction unit, or
- determining an encoded video according to VP8 or VP9, wherein said current block is a VP8 or VP9 block.

12. Method according to one of claims 1 to 11, comprising sending the encoded video by grouping current block of the same age.

13. Method according to claim 12, comprising assigning a transmission priority to a group of current blocks in function of their age.

14. Computer program (P) comprising instructions for performing the method of one of claims 1 to 13 when said instructions are executed by a computer.

15. Encoding device for encoding a video, comprising means (2, 3, P) for executing the method according to one of claims 1 to 13.

FIG. 1

FIG. 2

FIG. 3

FIG. 4

Europäisches
Patentamt

European
Patent Office

Office européen
des brevets

# EUROPEAN SEARCH REPORT

Application Number

EP 15 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/235249 A1 (ZHAO CHENGJI [SG] ET AL) 25 December 2003 (2003-12-25) | 1-7,9-15 | INV. H04N19/105 H04N19/107 H04N19/14 H04N19/147 H04N19/159 H04N19/176 ADD. H04N19/66 H04N19/37 |
| Y | * paragraphs [0038], [0040], [0044] - [0048] * | 8 | |
| Y | SUNDAY NYAMWENO ET AL: "Intra-distance Derived Weighted distortion for error resilience", IMAGE PROCESSING (ICIP), 2009 16TH IEEE INTERNATIONAL CONFERENCE ON, IEEE, PISCATAWAY, NJ, USA, 7 November 2009 (2009-11-07), pages 1057-1060, XP031628403, ISBN: 978-1-4244-5653-6 | 8 | |
| A | * sections 1, 2.2 * | 1-7,9-15 | |
| A | US 2014/119434 A1 (ZHANG LEI [US]) 1 May 2014 (2014-05-01) * paragraphs [0028] - [0031]; figure 3 * | 1-15 | |

TECHNICAL FIELDS SEARCHED (IPC)

H04N

The present search report has been drawn up for all claims

| Place of search | Date of completion of the search | Examiner |
|---|---|---|
| Munich | 18 December 2015 | Montoneri, Fabio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5991

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2015

| Patent document cited in search report | | Publication date | Patent family member(s) | | Publication date |
|---|---|---|---|---|---|
| US 2003235249 | A1 | 25-12-2003 | AU 2003241465 A1<br>US 2003235249 A1<br>WO 2004002150 A1 | | 06-01-2004<br>25-12-2003<br>31-12-2003 |
| US 2014119434 | A1 | 01-05-2014 | NONE | | |

EPO FORM P0459

For more details about this annex : see Official Journal of the European Patent Office, No. 12/82